# EUROPÄISCHE PATENTSCHRIFT

(11) **EP 1 936 166 B1**
(45) Veröffentlichungstag und Bekanntmachung des Hinweises auf die Patenterteilung: **26.01.2011**
(21) Anmeldenummer: 07022655.0
(22) Anmeldetag: 22.11.2007
(51) Int. Cl.: F02D 41/02, F02D 41/14, B60W 10/02

(54) **Verfahren und Steuergerät zum Schutz einer Kupplung in einem Triebstrang eines Kraftfahrzeugs**
Method and control unit for protecting a clutch in a motor vehicle power train
Procédé et dispositif de commande pour la protection d'un embrayage dans un ensemble de transmission d'un véhicule automobile

(30) Priorität: 13.12.2006 DE 102006058724
(43) Veröffentlichungstag der Anmeldung: 25.06.2008
(73) Patentinhaber: Dr. Ing. h.c. F. Porsche AG, 70435 Stuttgart (DE)
(72) Erfinder: Reiher, Marcus, 07973 Greiz (DE); Baur, Peter, 71297 Moensheim (DE)

(56) Entgegenhaltungen:
- WO-A1-2006/100399
- DE-A1- 4 124 722
- DE-A1- 10 312 088
- DE-A1- 19 806 497
- DE-A1-102005 040 578

## Beschreibung

Die vorliegende Erfindung betrifft ein Verfahren zur Steuerung eines Verbrennungsmotors in einem Triebstrang eines Kraftfahrzeugs, der ein Wechselgetriebe und eine vom Fahrer zu betätigende Reibungskupplung aufweist, über die ein Kraftschluss zwischen dem Verbrennungsmotor und dem Wechselgetriebe gesteuert wird, wobei das Kupplungsmoment des Verbrennungsmotors zum Schutz der Kupplung vor einer thermischen Überlastung verringerbar ist. Die Erfindung betrifft ferner ein Steuergerät nach dem Oberbegriff des Anspruchs 8.
Dabei wird hier unter dem Kupplungsmoment das vom Verbrennungsmotor an der Kupplung bereitgestellte Drehmoment verstanden. Dieses Kupplungsmoment ergibt sich aus dem Drehmoment, das aus der Verbrennung in Brennräumen des Verbrennungsmotors resultiert, durch Subtraktion von Verlusten, die sich durch den Ladungswechsel, die Reibung, sowie durch den Antrieb von Nebenaggregaten ergeben.

Ein solches Verfahren und ein solches Steuergerät ist jeweils aus der DE 10 2005 026 469 A1 bekannt. Bei dem bekannten Gegenstand geht es um einen Schutz einer neuwertigen Kupplung bei einer Überprüfung des Fahrzeugs am Ende eines Herstellungsprozesses. Ohne eine solche Schutzfunktion soll nach der DE 10 2005 026 469 A1 bei schnellen Fahrzeugbewegungen zwischen einem Montageband und einem Prüfstand die Gefahr einer thermischen Überlastung der Kupplung bestehen. Begründet wird diese Gefahr in der DE 10 2005 026 469 damit, dass kupplungsspezifische Parameter wie der Tastpunkt der Kupplung in einer solchen Situation noch nicht eingelernt seien. Zur Abhilfe wird das vom Verbrennungsmotor erzeugbare Drehmoment durch Eingriffe in die Motorsteuerung im Neuzustand auf einen maximal zulässigen Wert beschränkt.

Moderne Motorsteuerungen koordinieren alle Drehmomentanforderungen an den Verbrennungsmotor konsequent auf einer Momentenebene, also auf der Basis von Drehmomentforderungen und Einflüssen von Stellgrößen auf das tatsächliche Drehmoment. Dabei wird unter anderem aus aktuellen Werten der Füllung, der Luftzahl Lambda, des Zündwinkels und der Drehzahl ein theoretisch optimales indiziertes Drehmoment des Verbrennungsmotors gebildet. Dies ist z.B. aus der Veröffentlichung Ottomotor-Management: Motronic Systeme, Robert Bosch GmbH, Erstausgabe, April 2003, dort S. 41, unter dem Stichwort "Momentenmodell Drehmoment (Torque Modeling)" bekannt. Aus den bei der Stellgrößen-Berechnung und -Ausgabe verwendeten Wirkungsgraden der Stelleingriffe ergibt sich daraus ein Wert des indizierten Ist-Drehmoments und daraus unter Berücksichtigung der genannten Verluste ein Wert des tatsächlichen Kupplungsmomentes.

Thermische Überlastungen der Kupplung können nicht nur in der beschriebenen Situation am Ende des Herstellungsprozesses auftreten. Weitere kritische Situationen sind der Stop and Go Betrieb, ein Betrieb des Kraftfahrzeugs als Zugfahrzeug, ein Anfahren des Kraftfahrzeugs am Berg oder ein Halten des Kraftfahrzeugs am Berg mit schleifender Kupplung und ein kurzzeitiges, unvollständiges Öffnen des Kupplung bei einer Anforderung des vollen Drehmomentes für eine Maximierung der Fahrzeugbeschleunigung während der Fahrt, zum Beispiel vor einem Überholvorgang. Diese Situationen sind insbesondere bei leistungsstarken und schweren Kraftfahrzeugen wie SUV kritisch, da die hohe Normalkraft hier einen Schlupf der Antrittsräder verhindert, was zu einem erhöhten Schlupf an der Kupplung führt.

Prinzipiell könnte die bekannte Begrenzung des maximalen Momentes auch in diesen Situationen für einen Schutz der Kupplung verwendet werden. Diese Situationen unterscheiden sich jedoch von der eingangs genannten Situation am Ende eines Herstellungsprozesses dadurch, dass sich das Fahrzeug in der Hand eines Kunden befindet, der sich in der Regel bewusst für ein leistungsstarkes Fahrzeug entschieden hat und daher Beschränkungen der Motorleistung und oder des Drehmoments nur ungern akzeptiert.

Vor diesem Hintergrund besteht die Aufgabe der Erfindung in der Angabe eines Verfahrens und eines Steuergeräts, mit dem sich ein möglichst zuverlässiger Schutz der Kupplung bei einer größtmöglichen Akzeptanz notwendiger Eingriffe in die Motorsteuerung ergibt.

Diese Aufgabe wird jeweils mit den Merkmalen der unabhängigen Ansprüche gelöst. Die Lösung zeichnet sich daher dadurch aus, dass eine Temperatur der Kupplung ermittelt wird, ein von der ermittelten Temperatur abhängiger Schwellenwert einer Drehzahldifferenz über der Kupplung bestimmt wird, und das Kupplungsmoment verringert wird, wenn die Drehzahldifferenz den temperaturabhängig vorbestimmten Schwellenwert überschreitet.

Im Gegensatz zu dem bekannten Verfahren erfolgt damit keine Verringerung des Kupplungsmomentes auf einen festen Wert. Stattdessen wird der Drehzahlschlupf über der Kupplung auf den temperaturabhängig bestimmten Schwellenwert beschränkt. Dabei können sich ganz unterschiedliche Werte des Kupplungsmomentes ergeben.

Ein erster Vorteil der Erfindung besteht darin, dass das Kupplungsmoment für den Zweck des Kupplungsschutzes nicht rein vorbeugend und damit in vielen Fällen unnötig verringert wird, sondern dass eine Verringerung nur dann erfolgt, wenn tatsächlich eine thermische Überlastung der Kupplung droht.

Ein weiterer Vorteil ergibt sich daraus, dass erfindungsgemäß erfolgende Eingriffe den Fahrer intuitiv weniger irritieren, als dies bei einer von der Drehzahldifferenz unabhängigen Beschränkung des Kupplungsmoments der Fall wäre. Wird dagegen das Drehmoment ohne eine Begrenzung der Differenzdrehzahl begrenzt, kann sich bei gleicher Wärmefreisetzung in der Kupplung ein geringerer Drehmomentwert bei größerer Drehzahldifferenz ergeben. Die größere Drehzahldifferenz geht unter der Voraussetzung gleicher Kupplungsausgangsdrehzahlen mit einer höheren Motordrehzahl einher, die dem Fahrer, der die Kupplung zunächst schleifen lässt, für den Fall des Schließens der Kupplung ein größeres Drehmoment erwarten lässt, als tatsächlich zur Verfügung steht. Der Fahrer geht ja intuitiv davon aus, dass der Motor das zur aktuellen Drehzahl zugehörige optimale Moment bereitstellt, was aber wegen der Begrenzung des Drehmoments nicht der Fall ist. Insgesamt kann sich damit für den Fahrer ein irritierendes Leistungsverhalten ergeben.

Bei der Erfindung muss der Fahrer zwar auch einen Leistungsverlust in Kauf nehmen, - dieser Leistungsverlust passt jedoch zu dem wahrgenommenen Drehzahlniveau und führt daher nicht zu Irritationen. Bei der Erfindung gibt es daher eine eindeutigere, intuitiv wahrnehmbare Rückkopplung von Reaktionen des Fahrzeugs auf eine Kupplungsbetätigung durch den Fahrer. Insgesamt wird damit die Kupplung wirksam geschützt. Im Vergleich zu anderen Eingriffen ergibt sich dabei eine verbesserte Fahrbarkeit. Die verbesserte Fahrbarkeit sorgt zusammen mit der Beschränkung der Eingriffe auf tatsächlich nötige Fälle für die bessere Akzeptanz der Kupplungsschutzfunktion beim Fahrer.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: einen Triebstrang eines Kraftfahrzeugs; und
- Fig. 2: Verfahrensaspekte und Vorrichtungsaspekte eines Ausführungsbeispiels der Erfindung.

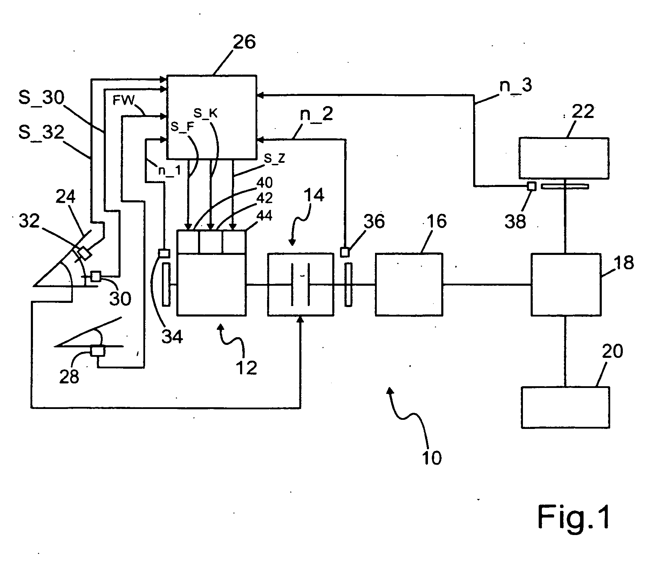

Im Einzelnen zeigt die Figur 1 einen Triebstrang 10 eines Kraftfahrzeugs mit einem Verbrennungsmotor 12, einer Kupplung 14, einem Wechselgetriebe 16, einem Differenzial 18 und Antriebsrädern 20, 22. Die Kupplung 14 ist eine Reibungskupplung, die vom Fahrer des Kraftfahrzeugs betätigt wird. Übliche Reibungskupplungen weisen wenigstens eine Mitnehmerscheibe auf, die mit Hilfe einer federbelasteten Druckplatte auf eine Schwungscheibe des Verbrennungsmotors 12 gepresst wird. Die Mitnehmerscheibe ist axial beweglich aber drehfest mit einer Getriebeeingangswelle verbunden. Im geschlossenen Zustand der Kupplung 14 wird das Drehmoment des Verbrennungsmotors 12 durch einen Kraftschluss in die Mitnehmerscheibe der Kupplung 14 übernommen und von dort auf die Getriebeeingangswelle übertragen.

Die Betätigung der Kupplung 14 erfolgt gegen die Federbelastung. Unter einer Betätigung der Kupplung durch den Fahrer des Kraftfahrzeuges wird in dieser Anmeldung verstanden, dass die zur Überwindung der Federbelastung erforderliche Betätigungskraft zumindest teilweise vom Fahrer aufgebracht wird. In der Ausgestaltung der Figur 1 dient dazu ein Kupplungspedal 24. Die Übertragung der Pedalkraft auf die Kupplung 14 erfolgt in der Regel über ein hydraulisches System.

Der Verbrennungsmotor 12 wird von einem Steuergerät 26 gesteuert, das dazu Signale verarbeitet, in denen sich verschiedene Betriebsparameter des Triebstrangs 10 abbilden. In der Darstellung der Figur 1 sind das vor allem Signale eines Fahrerwunschgebers 28, der eine Drehmomentforderung FW des Fahrers erfasst, das Signal S_30 eines ersten Kupplungssensors 30, der eine Betätigung des Kupplungspedals 24 erfasst, das Signal S_32 eines zweiten Kupplungssensors 32, das ein nicht betätigtes Kupplungspedal 24 signalisiert, das Signal n_1 eines ersten Drehzahlgebers 34, der eine Verbrennungsmotor-seitige erste Drehzahl n_1 der Kupplung 14 (KupplungsEingangsdrehzahl) erfasst, das Signal n_2 eines zweiten Drehzahlgebers 36, der eine Wechselgetriebe-seitige zweite Drehzahl n_2 der Kupplung 14 (Kupplungsausgangsdrehzahl) erfasst, und, alternativ oder ergänzend zum zweiten Sensor 36, das Signal n_3 eines Raddrehzahlsensors 38, der eine Drehzahl n_3 eines Antriebsrades des Kraftfahrzeugs erfasst.

Unter der Voraussetzung, dass das Steuergerät 26 den im Wechselgetriebe 16 eingelegten Gang kennt, kann es die Drehzahl n_2 aus der Drehzahl n_3 und der vorliegenden Übersetzung bestimmen. Die Verwendung des für Antiblockiersysteme und/oder Fahrdynamikregelungen ohnehin vorhandenen Raddrehzahlsensors 38 besitzt daher Kostenvorteile, die sich durch eine mögliche Einsparung des zweiten Drehzahlsensors 36 ergeben.

Die Kupplungssensoren 30, 32 sind bevorzugt nicht als Endlagenschalter realisiert, sondern liefern dann eine Signaländerung, wenn das Kupplungspedal 24 vorbestimmte Pedalwegpositionen passiert, die zwischen den Endlagen liegen und einen Betätigungsbereich begrenzen, in dem der Fahrer mit dem Pedal 24 die Drehmomentübertragung über die Kupplung 14 steuert. In einer bevorzugten Ausgestaltung erzeugt das Steuergerät 26 ein internes Signal KB, das eine Betätigung der Kupplung 14 durch den Fahrer anzeigt, wenn die Position des Kupplungspedals 24 in dem Betätigungsbereich liegt.

Der erste Kupplungssensor 30 signalisiert in einer Ausgestaltung eine Position bei 80% des Pedalwegs zwischen einem nicht betätigten und einem voll betätigten Pedal 24, während der zweite Kupplungssensor 32 sein Signal bei ca. 5% des maximalen Pedalwegs ändert. Andere Werte sind ebenfalls möglich. Wesentlich ist in jedem Fall, dass die Signale der Kupplungssensoren 30, 32 dem Steuergerät 26 erlauben, eine zwischen den genannten Pedalpositionen erfolgende Betätigung des Pedals 24 durch den Fahrer zu detektieren.

Es versteht sich, dass moderne Triebstränge 10 mit einer Vielzahl weiterer Sensoren ausgerüstet sind, die hier aus Gründen der Übersichtlichkeit nicht dargestellt sind. Beispiele solcher Sensoren sind Luftmassenmesser, Temperatursensoren, Drucksensoren, etc. Die Aufzählung der Sensoren 28 bis 38 ist daher nicht abschließend gemeint.

Es muss auch nicht für jeden vom Steuergerät 26 verarbeiteten Betriebsparameter ein eigener Sensor vorhanden sein, weil das Steuergerät 26 verschiedene Betriebsparameter mit Hilfe von Rechenmodellen aus anderen, gemessenen Betriebsparametern modellieren kann.

Dies gilt insbesondere für die Kupplungstemperatur TK, die vom Steuergerät 26 in einer Ausgestaltung aus einer Temperatur des Verbrennungsmotors 12 und/oder des Wechselgetriebes 16 als Basiswert und einem Wärmeenergieeintrag modelliert wird, der aus dem Kupplungsmoment und der Drehzahldifferenz über der Kupplung 14 bestimmt wird.

Aus den empfangenen Sensorsignalen bildet das Steuergerät 26 unter anderem Stellgrößen zur Einstellung des vom Verbrennungsmotor 12 zu erzeugenden Drehmomentes.

im Übrigen ist das Steuergerät 26 dazu eingerichtet, insbesondere dazu programmiert, das erfindungsgemäße Verfahren oder eine seiner Ausgestaltungen durchzuführen und/oder den entsprechenden Verfahrensablauf zu steuern.

Als Stellglieder weist der Verbrennungsmotor 12 üblicherweise Teilsysteme 40, 42, 44 auf, von denen ein Teilsystem 40 zur Steuerung der Füllung von Brennräumen dient, ein Teilsystem 42 zur Steuerung der Gemischbildung dient, und ein Teilsystem 44 zur Steuerung der Zündung der Brennraumfüllungen dient. Das Teilsystem 40 zur Steuerung der Füllungen weist in einer Ausgestaltung eine elektronisch gesteuerte Drosselklappe zur Steuerung der Luftzufuhr zum Verbrennungsmotor 12 auf, die mit einem Stellsignal S_F angesteuert wird. Das Teilsystem 42 zur Steuerung der Gemischbildung weist in einer Ausgestaltung eine Anordnung von Injektoren auf, über die Kraftstoff mit Stellsignalen S_K in ein Saugrohr oder in individuelle Brennräume des Verbrennungsmotors 12 zugemessen wird. Stellsignale S_Z dienen zur Auslösung von Zündungen in den Brennräumen.

Das vom Verbrennungsmotor 12 erzeugte Drehmoment kann insbesondere durch Beschränkungen der Brennraumfüllungen und/oder durch Abschalten der Kraftstoffzufuhr zu einem oder mehreren Brennräumen und/oder durch Verzögern der Auslösung von Zündungen gegenüber einem Zündzeitpunkt, bei dem sich ein optimales Drehmoment ergeben würde, verringert werden (Spätverstellung der Zündung).

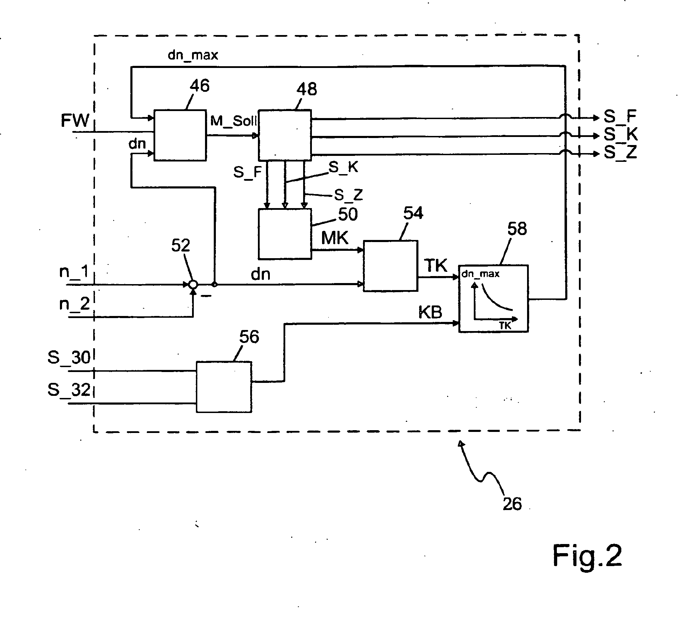

Fig. 2 veranschaulicht eine Ausgestaltung der Erfindung in der Form eines Blockschaltbilds des Steuergeräts 26. Die einzelnen Blöcke können dabei sowohl einzelnen Verfahrensschritten als auch Funktionsmodulen des Steuergeräts 26 zugeordnet werden, sodass die Fig. 2 sowohl Verfahrensaspekte als auch Vorrichtungsaspekte der Erfindung offenbart.

Im Einzelnen repräsentiert der Block 46 die Bildung eines Sollwertes M_Soll für das Drehmoment des Verbrennungsmotors 12 in Abhängigkeit von einem Fahrerwunsch FW und/oder in Abhängigkeit von Anforderungen, die im Steuergerät 26 für eine Steuerung des Verbrennungsmotors 12 gebildet werden. Solche Anforderungen ergeben sich zum Beispiel durch eine Drehzahlbegrenzung, bei der das Drehmoment des Verbrennungsmotors 12 bei Bedarf reduziert wird, um die Überschreitung einer maximal zulässigen Drehzahl des Verbrennungsmotors 12 zu verhindern.

Der im Block 46 gebildete Sollwert M _Soll wird an einen Block 48 übergeben, der daraus die Stellgrößen S_F und/oder S_K und/oder S_Z bildet, mit denen die Teilsysteme 40 und/oder 42 und/oder 44 aus der Figur 1 so angesteuert werden, dass der Verbrennungsmotor 12 das geforderte Drehmoment M_Soll erzeugt. In der Ausgestaltung der Figur 2 werden die genannten Stellgrößen S_F und/oder S_K und/oder S_Z parallel an einen internen Block 50 des Steuergeräts 26 übergeben, der die eingangs als bekannt erwähnte Berechnung des Kupplungsmomentes MK aus Betriebsparametern des Verbrennungsmotors 12 repräsentiert. Es versteht sich, dass dabei alternativ oder ergänzend zu den genannten Stellgrößen auch weitere Betriebsparameter des Verbrennungsmotors 12 verarbeitet werden können.

Parallel zu der Berechnung des Kupplungsmomentes MK im Block 50 erfolgt in einer Verknüpfung 52 die Bildung einer Drehzahldifferenz dn aus der Kupplungseingangsdrehzahl n_1 und der Kupplungsausgangsdrehzahl n_2. Im Block 50 erfolgt eine Bildung der Temperatur TK der Kupplung 14 durch ein Rechenmodell aus Betriebsparametern des Triebstrangs 10. In einer bevorzugten Ausgestaltung gehören zu den Betriebsparametern wenigstens Werte des Kupplungsmomentes MK und der Drehzahldifferenz dn über der Kupplung 14. Das Rechenmodell berücksichtigt dabei in einer Ausgestaltung eine gemessene und/oder modellierte Temperatur des Verbrennungsmotors 12 und/oder des Wechselgetriebes 16 als Basiswert. Zusätzlich berücksichtigt das Rechenmodell die Reibungswärme, die sich aus dem Produkt des Drehmoments MK und der Drehzahldifferenz dn ergibt.

Das Integral dieses Produktes ist bekanntlich zur verrichteten Reibungsarbeit proportional, die zusammen mit empirisch fassbaren Größen wie der Wärmekapazität der Kupplung 14 und der Wärmeableitung aus der Kupplung 14 die Kupplungstemperatur TK wesentlich mitbestimmt. Werte der Wärmekapazität und Werte und/oder Zusammenhänge zur Beschreibung der Wärmeableitung sind im Steuergerät 26, beziehungsweise im Block 50, hinterlegt. Es versteht sich aber, dass die Kupplungstemperatur TK alternativ oder ergänzend auch durch einen Temperatursensor an der Kupplung 14 bestimmt werden kann. Parallel zur Bestimmung der Kupplungstemperatur TK wird im Block 56 durch Auswertung der Signale S_30 und S_32 festgestellt, ob der Fahrer das Kupplungspedal 24 betätigt. Daher wirkt die Funktion wie eine temperaturabhängige Drehzahlbegrenzung.

Bei einer Betätigung des Kupplungspedals 24 gibt der Block 56 ein Signal KB aus. In diesem Fall wird mit dem Wert TK der Kupplungstemperatur aus dem Block 54 ein Block 58 adressiert, in dem vorbestimmte Grenzwerte dn_max für die Drehzahldifferenz dn über der Kupplung 14 als Funktion der Kupplungstemperatur TK abgelegt sind. Diese Funktion ist im Block 58 bevorzugt als Kennlinie abgelegt, die mit steigenden Werten der Kupplungstemperatur TK monoton fällt. Je höher der Wert der Kupplungstemperatur TK ist, desto niedriger fällt der Grenzwert dn_max aus.

Der im Block 58 gebildete Wert dn_max für die maximale Drehzahldifferenz dn über der Kupplung 14 wird dem Block 46 übergeben, in dem der Sollwert M_ Soll für das Drehmoment des Verbrennungsmotors 12 gebildet wird. Parallel wird dem Block 46 auch die in der Verknüpfung 52 gebildete Drehzahldifferenz dn übergeben. Zum Schutz der Kupplung reduziert der Block 46 den Sollwert M_Soll für das Drehmoment dann, wenn sich die Drehzahldifferenz dn unzulässig hohen Werten dn_max annähert und/oder diese erreicht und/oder diese überschreitet.

Im Ergebnis wird dadurch die erlaubte Drehzahldifferenz über der Kupplung in Abhängigkeit von der Kupplungstemperatur beschränkt. Da die in der Kupplung in Wärme umgewandelte mechanische Leistung proportional zu der Drehzahldifferenz und dem an der Kupplung wirksamen Drehmoment ist, bewirkt die erfindungsgemäße Beschränkung der Drehzahldifferenz eine Beschränkung der Wärmeleistung ohne Veränderung des Drehmoment/Drehzahl-Zusammenhangs, der dem Fahrer vertraut ist.

Bei einer akustisch oder visuell über einen Drehzahlmesser wahrnehmbaren Drehzahl und gleichzeitiger Anforderung des vollen Drehmoments durch den Fahrer wird das zu dieser Drehzahl über die Drehmoment/Drehzahl-Kennlinie des Verbrennungsmotors zugehörige Drehmoment auch tatsächlich bereitgestellt. Erst wenn die Drehzahldifferenz den Grenzwert überschreitet, wird das vom Verbrennungsmotor bereitgestellte Drehmoment durch eine Begrenzung der Motordrehzahl beschränkt. Daher wirkt die Funktion wie eine variable Drehzahlbegrenzung.
Dies wird bei einem Vergleich einer Situation deutlich, die einmal ohne die Erfindung und einmal mit der Erfindung betrachtet wird.

Lässt der Fahrer die Kupplung unter Anforderung des vollen Drehmoments ohne die Erfindung schleifen, so könnte die Drehzahl des Verbrennungsmotors und damit auch der Drehzahlschlupf über der Kupplung bei großen Drehmomentwerten stark ansteigen. Als Folge würde eine entsprechende Reibungswärme in der Kupplung frei werden, was diese unter ungünstigen Bedingungen überhitzen könnte.

Im Rahmen der Erfindung wird der Drehzahlanstieg dagegen begrenzt, wenn dabei eine thermische Überlastung der Kupplung droht. Die Begrenzung wird vom Fahrer unmittelbar wahrgenommen. Das Fahrzeug signalisiert ihm durch den fehlenden Drehzahlanstieg sofort, dass es die gewünschte Leistung momentan nicht bereitstellen kann.

Im Ergebnis wird dadurch eine Reibungskupplung 14, deren Kraftschluss durch einen Fahrer des Kraftfahrzeugs mit Hilfe eines Pedals 24 oder manuell gesteuert wird, wirksam vor einer thermischen Überlastung geschützt.

Ergänzend sieht eine weitere Ausgestaltung vor, dass ein Dauerschlupf bei nicht betätigter Kupplung begrenzt wird. Dazu kann die Differenzdrehzahl dn bei nicht betätigter Kupplung 14 im Block 46 ausgewertet werden. Bei nicht betätigter und damit im Normalfall geschlossener Kupplung 14 sollte die Drehzahldifferenz über der Kupplung 14 gleich 0 sein. Weicht die Drehzahldifferenz unter diesen Bedingungen nennenswert vom Wert Null ab, zeigt dies einen unzulässigen Schlupf an. In diesem Fall wird bevorzugt das Drehmoment des Verbrennungsmotors begrenzt, wobei diese Begrenzung bevorzugt unabhängig von einer Temperatur der Kupplung erfolgt.

## Patentansprüche

1. Verfahren zur Steuerung eines Verbrennungsmotors (12) in einem Triebstrang (10) eines Kraftfahrzeugs, der ein Wechselgetriebe (16) und eine vom Fahrer zu betätigende Reibungskupplung (14) aufweist, über die ein Kraftschluss zwischen dem Verbrennungsmotor (12) und dem Wechselgetriebe (16) gesteuert wird, wobei das Kupplungsmoment (MK) des Verbrennungsmotors (12) zum Schutz der Kupplung (14) vor einer thermischen Überlastung verringerbar ist, **dadurch gekennzeichnet, dass** eine Temperatur (TK) der Kupplung (14) ermittelt wird, ein von der ermittelten Temperatur (TK) abhängiger Grenzwert (dn_max) einer Drehzahldifferenz (dn) über der Kupplung (14) bestimmt wird, und das Kupplungsmoment (MK) verringert wird, wenn sich die Drehzahldifferenz (dn) dem temperaturabhängig vorbestimmten Grenzwert (dn_max) annähert oder ihn erreicht oder ihn überschreitet.

2. Verfahren nach Anspruch 1, **dadurch gekennzeichnet, dass** die Temperatur (TK) der Kupplung (14) mit einem Rechenmodell aus Betriebsparametern des Triebstrangs (10) ermittelt wird.

3. Verfahren nach Anspruch 2, **dadurch gekennzeichnet, dass** zu den Betriebsparametern wenigstens Werte des Kupplungsmomentes (MK) und der Drehzahldifferenz (dn) über der Kupplung (14) gehören.

4. Verfahren nach einem der vorhergehenden Ansprüche, **dadurch gekennzeichnet, dass** überwacht wird, ob die Kupplung (14) betätigt wird und das Verfahren nur bei betätigter Kupplung (14) durchgeführt wird.

5. Verfahren nach Anspruch 4, **dadurch gekennzeichnet, dass** ergänzend ein Dauerschlupf bei nicht betätigter Kupplung (14) begrenzt wird.

6. Verfahren nach einem der vorhergehenden Ansprüche, **dadurch gekennzeichnet, dass** die Drehzahldifferenz (dn) aus Drehzahlwerten (n_1) eines Motordrehzahlsensors (34) und eines Getriebedrehzahlsensors (36) ermittelt wird.

7. Verfahren nach einem der vorhergehenden Ansprüche, **dadurch gekennzeichnet, dass** die Drehzahldifferenz alternativ oder ergänzend zu der Ermittlung nach Anspruch 6 aus Drehzahlwerten eines Motordrehzahlsensors (34) und eines Raddrehzahlsensors (38) des Kraftfahrzeugs ermittelt wird.

8. Steuergerät (26), das dazu eingerichtet ist, einen Verbrennungsmotor (12) in einem Triebstrang (10) eines Kraftfahrzeugs zu steuern, wobei der Triebstrang (10) ein Wechselgetriebe (16) und eine vom Fahrer zu betätigende Reibungskupplung (14) aufweist, über die ein Kraftschluss zwischen dem Verbrennungsmotor (12) und dem Wechselgetriebe (16) gesteuert wird, und wobei das Steuergerät (26) dazu eingerichtet ist, das Kupplungsmoment (MK) des Verbrennungsmotors (12) zum Schutz der Kupplung (14) vor einer thermischen Überlastung zu verringern, **dadurch gekennzeichnet, dass** das Steuergerät (26) dazu eingerichtet ist, eine Temperatur (TK) der Kupplung (24) zu ermitteln, einen von der ermittelten Temperatur (TK) abhängigen Grenzwert (dn_max) einer Drehzahldifferenz (dn) über der Kupplung (14) zu bestimmen, und das Kupplungsmoment (MK) zu verringern, wenn sich die Drehzahldifferenz (dn) dem temperaturabhängig vorbestimmten Grenzwert (dn-max) annnähert oder ihn erreicht oder ihn überschreitet.

9. Steuergerät (26) nach Anspruch 8, **dadurch gekennzeichnet, dass** es dazu eingerichtet ist, einen Ablauf eines Verfahrens nach einem der Ansprüche 2 bis 8 zu steuern.

## Claims

1. Method for controlling an internal combustion engine (12) in a drivetrain (10) of a motor vehicle, which drivetrain (10) has a variable-speed transmission (16) and a friction clutch (14) which is to be actuated by the driver, by means of which friction clutch (14) a force-fitting action between the internal combustion engine (12) and the variable-speed transmission (16) is controlled, with it being possible for the clutch torque (MK) of the internal combustion engine (12) to be reduced in order to protect the clutch (14) from thermal overloading, **characterized in that** a temperature (TK) of the clutch (14) is determined, a limit value (dn max), which is dependent on the determined temperature (TK), of a rotational speed difference (dn) across the clutch (14) is determined, and the clutch torque (MK) is reduced if the rotational speed difference (dn) approaches or reaches or exceeds the temperature-dependent predetermined limit value (dn_max).

2. Method according to Claim 1, **characterized in that** the temperature (TK) of the clutch (14) is determined by means of a mathematical model from operating parameters of the drivetrain (10).

3. Method according to Claim 2, **characterized in that** the operating parameters include at least values of the clutch torque (MK) and of the rotational speed difference (dn) across the clutch (14).

4. Method according to one of the preceding claims, **characterized in that** it is monitored as to whether the clutch (14) is actuated, and the method is carried out only when the clutch (14) is actuated.

5. Method according to Claim 4, **characterized in that**, in addition, a permanent slip when the clutch (14) is not actuated is limited.

6. Method according to one of the preceding claims, **characterized in that** the rotational speed difference (dn) is determined from rotational speed values (n_1) of an engine rotational speed sensor (34) and of a transmission rotational speed sensor (36).

7. Method according to one of the preceding claims, **characterized in that**, alternatively or in addition to the determination according to Claim 6, the rotational speed difference is determined from rotational speed values of an engine rotational speed sensor (34) and of a wheel rotational speed sensor (38) of the motor vehicle.

8. Control unit (26) which is set up to control an internal combustion engine (12) in a drivetrain (10) of a motor vehicle, with the drivetrain (10) having a variable-speed transmission (16) and a friction clutch (14) which is to be actuated by the driver, by means of which friction clutch (14) a force-fitting action between the internal combustion engine (12) and the variable-speed transmission (16) is controlled, and with the control unit (26) being set up to reduce the clutch torque (MK) of the internal combustion engine (12) in order to protect the clutch (14) from thermal overloading, **characterized in that** the control unit (26) is set up to determine a temperature (TK) of the clutch (14), to determine a limit value (dn_max), which is dependent on the determined temperature (TK), of a rotational speed difference (dn) across the clutch (14), and to reduce the clutch torque (MK) if the rotational speed difference (dn) approaches or reaches or exceeds the temperature-dependent predetermined limit value (dn_max).

9. Control unit (26) according to Claim 8, **characterized in that** said control unit (26) is set up to control a process of a method according to one of Claims 2 to 8.

## Revendications

1. Procédé pour commander un moteur à combustion (12) dans une chaîne motrice (10) d'un véhicule automobile, laquelle présente une boîte de vitesses (16) et un accouplement à friction (14) à actionner par le conducteur, par le biais duquel est commandée une liaison par adhérence entre le moteur à combustion (12) et la boîte de vitesses (16), le couple d'accouplement (MK) du moteur à combustion (12) pouvant être réduit afin de protéger l'accouplement (14) contre une surcharge thermique, **caractérisé en ce qu'**une température (TK) de l'accouplement (14) est déterminée, une valeur limite (dn_max), dépendante de la température (TK) déterminée, d'une différence de vitesse de rotation (dn) de part et d'autre de l'accouplement (14) étant déterminée et le couple d'accouplement (MK) étant réduit lorsque la différence de vitesse de rotation (dn) se rapproche de la valeur limite (dn_max) prédéfinie en fonction de la température ou l'atteint ou encore la dépasse.

2. Procédé selon la revendication 1, **caractérisé en ce que** la température (TK) de l'accouplement (14) est déterminée avec un modèle de calcul à partir de paramètres de fonctionnement de la chaîne motrice (10).

3. Procédé selon la revendication 2, **caractérisé en ce que** les paramètres de fonctionnement incluent au moins les valeurs du couple d'accouplement (MK) et de la différence de vitesse de rotation (dn) de part et d'autre de l'accouplement (14).

4. Procédé selon l'une des revendications précédentes, **caractérisé en ce que** l'actionnement de l'accouplement (14) est surveillé et le procédé n'est mis en oeuvre que lorsque l'accouplement (14) est actionné.

5. Procédé selon la revendication 4, **caractérisé en ce qu'**en complément, un patinage continu est limité lorsque l'accouplement (14) n'est pas actionné.

6. Procédé selon l'une des revendications précédentes, **caractérisé en ce que** la différence de vitesse de rotation (dn) est déterminée à partir de valeurs de la vitesse de rotation (n_1) d'un détecteur de vitesse de rotation du moteur (34) et d'un détecteur de vitesse de rotation de la boîte de vitesses (36).

7. Procédé selon l'une des revendications précédentes, **caractérisé en ce que** la différence de vitesse de rotation, en variante ou en complément de la détermination selon la revendication 6, est déterminée à partir de valeurs de la vitesse de rotation d'un détecteur de vitesse de rotation du moteur (34) et d'un détecteur de vitesse de rotation des roues (38).

8. Module de commande (26) conçu pour commander un moteur à combustion (12) dans une chaîne motrice (10) d'un véhicule automobile, la chaîne motrice (10) présentant une boîte de vitesses (16) et un accouplement à friction (14) à actionner par le conducteur, par le biais duquel est commandée une liaison par adhérence entre le moteur à combustion (12) et la boîte de vitesses (16), et le module de commande (26) étant conçu pour réduire le couple d'accouplement (MK) du moteur à combustion (12) afin de protéger l'accouplement (14) contre une surcharge thermique, **caractérisé en ce que** le module de commande (26) est conçu pour déterminer une température (TK) de l'accouplement (14), pour déterminer une valeur limite (dn max), dépendante de la température (TK) déterminée, d'une différence de vitesse de rotation (dn) de part et d'autre de l'accouplement (14) et pour réduire le couple d'accouplement (MK) lorsque la différence de vitesse de rotation (dn) se rapproche de la valeur limite (dn_max) prédéfinie en fonction de la température ou l'atteint ou encore la dépasse.

9. Module de commande (26) selon la revendication 8, **caractérisé en ce qu'**il est conçu pour commander une exécution d'un procédé selon l'une des revendications 2 à 8.
